# EUROPÄISCHE PATENTSCHRIFT

(11) **EP 4 015 415 B1**
(45) Veröffentlichungstag und Bekanntmachung des Hinweises auf die Patenterteilung: **16.10.2024**
(21) Anmeldenummer: 20215874.7
(22) Anmeldetag: 21.12.2020
(51) Int. Cl.: B65G 1/04

(54) **GREIFER FÜR KOMMISSIONIERVORRICHTUNG UND VERFAHREN ZUM BETREIBEN EINER KOMMISSIONIERVORRICHTUNG MIT DIESEM GREIFER**
PICKING DEVICE GRIPPER AND METHOD FOR OPERATING A PICKING DEVICE WITH THE GRIPPER
PRÉHENSEUR POUR DISPOSITIF DE PRÉPARATION DE COMMANDES ET PROCÉDÉ DE FONCTIONNEMENT D'UN DISPOSITIF DE PRÉPARATION DE COMMANDES POURVU DUDIT PRÉHENSEUR

(43) Veröffentlichungstag der Anmeldung: 22.06.2022
(73) Patentinhaber: Becton Dickinson Rowa Germany GmbH, 53539 Kelberg (DE)
(72) Erfinder: HELLENBRAND, Christoph, 56761 Kaifenheim (DE)
(74) Vertreter: Zenz Patentanwälte Partnerschaft mbB

(56) Entgegenhaltungen:
- EP-A1- 2 620 391
- WO-A1-2019/015815
- DE-A1- 2 530 385
- DE-A1- 3 313 754
- JP-U- S53 153 689
- US-A1- 2018 111 757

## Beschreibung

Die vorliegende Erfindung betrifft einen Greifer für eine Kommissioniervorrichtung mit horizontalen Regalböden zur Lagerung von Kleinstückgütern, insbesondere Arzneimittelpackungen und Nahrungsergänzungsmittelpackungen, sowie ein Verfahren zum Betreiben einer Kommissioniervorrichtung mit einem erfindungsgemäßen Greifer.

Bei modernen Kommissioniervorrichtungen, wie sie häufig in Apotheken verwendet werden, wird eine große Anzahl verschiedener und unterschiedlich dimensionierter Arzneimittelpackungen bzw. Nahrungsergänzungsmittelpackungen chaotisch und platzoptimiert auf langgestreckten horizontalen Regalböden gelagert. Diese bilden zusammen mit Regalwänden eine Mehrzahl von Regalfächern, wobei pro Regalfach bzw. Regalboden eine große Anzahl von Kleinstückgütern gelagert wird.

Bei einer platzoptimierten Lagerung werden Kleinstückgüter, beispielsweise Arzneimittelpackungen und Nahrungsergänzungsmittelpackungen, derart auf Regalböden gelagert, dass eine möglichst große Anzahl von Kleinstückgütern pro Flächeneinheit eines Regalbodens gelagert werden kann, das heißt derart, dass möglichst wenig Freiraum auf einem Regalboden verbleibt. Bei der üblichen chaotischen platzoptimierten Lagerung wird hingegen nicht darauf geachtet, dass die Kleinstückgüter derart in der Kommissioniervorrichtung gelagert werden, dass die Gewichtsverteilung zwischen den einzelnen Regalböden gleichmäßig erfolgt. Daraus folgt, dass es durchaus vorkommen kann, dass eine Vielzahl von relativ "schweren" Kleinstückgütern auf einem Regalboden gelagert werden. Die Regalböden bestehen üblicherweise aus einem dünnen Material mit einer glatten Oberfläche. Bei Kommissioniervorrichtungen, wie sie in Apotheken verwendet werden, werden oft Regalböden aus Glas verwendet. In Abhängigkeit von der Breite eines Regalfaches und der Belegung kann es vorkommen, dass sich die Regalböden insbesondere in der Mitte eines Regalfaches durchbiegen, woraus folgt, dass die auf den durchgebogenen Regalböden gelagerten Kleinstückgüter sowie die Regalböden selbst nicht bei der Z-Position (die Z-Achse ist die Vertikalachse) angeordnet sind, wo dies "erwartet wird". In Abhängigkeit von dem Grad der Durchbiegung sind Regalböden und die darauf angerordneten Kleinstückgüter "tiefer", was einer geringeren Z-Position entspricht.

Um Packungen (im nachfolgenden wird der Begriff der "Packung" als Synonym für insbesondere Arzneimittelpackungen und Nahrungsergänzungsmittelpackungen und allgemein Kleinstückgüter verwendet) möglichst rasch aus einer Kommissioniervorrichtung auslagern zu können, sind den Regalböden, auf welchen sie gelagert sind, Sollpositionen zugeordnet, welche von einem Greifer angefahren werden, wenn eine Packung von einem Regalboden bzw. Regalfach ausgelagert werden soll. Bei dem Auslagern einer Packung wird diese von einer Transporteinrichtung gegriffen und auf einen Ablagetisch des Greifers bewegt. Um dies möglichst ohne ein Hängenbleiben der Packung zwischen einem notwendigen Spalt zwischen Be- und Entladestirnseite des Greifers und der entsprechenden Stirnseite des Regalbodens durchführen zu können, wird der Greifer so verfahren, dass die Oberfläche des Ablagetisches und die Oberfläche des Regalbodens bei der in etwa gleichen Z-Position sind (bei Annahme eines nicht gebogenen Regalbodens).

Wenn eine Packung von einem Regalboden auf einen Ablagetisch bewegt werden soll, ist es unschädlich, wenn die Z-Position der Oberfläche des Ablagetisches des Greifers geringfügig unter der Z-Position der Oberfläche des Regalbodens ist. Wenn eine Packung von dem Ablagetisch eines Greifers hingegen auf einen Regalboden bewegt werden soll, ist es unschädlich, wenn der Regalboden bei einer geringfügig geringeren Z-Position angeordnet ist.

Wenn jedoch auf einem Regalboden eine Vielzahl von relativ schweren Packungen gelagert ist, kann es vorkommen, dass dieser Regalboden derart durchgebogen ist, dass bei einer Situation, in welcher eine Packung von einem Regalboden auf den Ablagetisch bewegt werden soll, die aktuelle bzw. wahre Z-Position der Oberfläche des Regalbodens deutlich unter der Z-Position der Oberfläche des Ablagetisches des Greifers ist. Wird in einer solchen Situation versucht, eine Packung von dem Regalboden auf den Greifer, wie er beispielsweise aus der WO 2019/015815 A1 bekannt ist, zu bewegen, bleibt die Packung an der Vorderkante des Ablagetisches hängen, die in dieser Situation deutlich über die Oberfläche des Regalbodens hinausragt. Mit den bekannten Greifern kann eine Packung dann nicht auf den Ablagetisch bewegt werden, ohne den Greifer hinsichtlich der Z-Position anzupassen. WO 2019/015815 A1 offenbart einen Greifer gemäß dem Oberbegriff des Anspruchs 1.

Eine Anpassung der Z-Position kann aber bei den bekannten Greifern nur dadurch ausgelöst werden, dass diese in Reaktion auf die missglückte Auslagerung einer Packung angepasst wird.

Aus den Druckschriften US 2018/111757 A1 und JP S53 153689 U2 sind Greifer bzw. Transportsysteme bekannt, die über ein Sensorsystem an einer Markierung eines Regalgestells ausgerichtet werden.

Es ist Aufgabe der vorliegenden Erfindung, einen Greifer bereitzustellen, mit welchem eine Fehlausrichtung zwischen Regalboden und Greifer vor Durchführen einer Ein- oder Auslagerungsbewegung ermittelt werden kann. Es ist ferner Aufgabe der Erfindung, ein Verfahren zum Betreiben einer Kommissioniervorrichtung mit einem entsprechenden Greifer bereitzustellen.

Die Aufgabe wird erfindungsgemäß gelöst durch einen Greifer für eine Kommissioniervorrichtung mit horizontalen Regalböden zur Lagerung von Kleinstückgütern gemäß Patentanspruch 1. Der erfindungsgemäße Greifer umfasst einen sich in einer ersten horizontalen Richtung (X-Richtung) und einer zweiten horizontalen Richtung (Y-Richtung) orthogonal zur ersten horizontalen Richtung erstreckenden Ablagetisch mit zumindest einem Endabschnitt mit einer Aus- und Einlagerungsstirnseite, wobei der Ablagetisch und der Endabschnitt eine obere Auflagefläche definieren, eine über dem Ablagetisch angeordnete und in der ersten horizontalen Richtung bewegbare Transporteinrichtung zum Bewegen von Kleinstückgütern von einem horizontalen Regalboden auf den Ablagetisch und zumindest eine mit einer Steuereinrichtung gekoppelte und in dem zumindest einen Endabschnitt angeordnete Sensoreinrichtung mit zugeordneten Detektionsbereichen DBx, wobei die Sensoreinrichtung entlang einer vertikalen Z-Richtung derart angeordnet ist, dass die Detektionsbereiche DBx einen sich vertikal erstreckenden Raum DB1 - DBn vor der Auslagerungsstirnseite abdecken und wobei die Steuereinrichtung derart ausgebildet ist, dass über eine Auswertung der Sensoreinrichtung die Ausrichtung des Greifers zu einem horizontalen Regalboden ermittelbar ist.

Erfindungsgemäß ist die Sensoreinheit bezogen auf die Y-Richtung mittig in dem Endabschnitt angeordnet ist. Dadurch ist gewährleistet, dass stets die "mittlere" Abweichung zwischen der Oberfläche des Regalbodens und der Auflagefläche des Ablagetisches mittels der Sensoreinheiten festgestellt wird (sofern vorhanden).

Indem ein üblicher Greifer für eine Kommissioniervorrichtung mit zumindest einer Sensoreinrichtung mit einer Mehrzahl von sich entlang einer Z-Achse erstreckenden Detektionsbereichen DBx in dem zumindest einen Endabschnitt versehen wird, ist es möglich, bereits vor der Durchführung einer Ein- oder Auslagerung eines Kleinstückgutes von einem Regalboden auf den Ablagetisch oder von dem Ablagetisch auf einen Regalboden zu ermitteln, ob die Ausrichtung des Greifers an einem entsprechenden Regalboden derart ist, dass lediglich ein solcher Versatz zwischen der Auflagefläche des Ablagetisches und der Auflagefläche des Regalbodens vorhanden ist, der eine Bewegung eines Kleinstückgutes nicht beeinträchtigt. Durch Auswerten der Mehrzahl der Detektionsbereiche kann genau ermittelt werden, in welchen der Detektionsbereiche der Regalboden hineinreicht. Als Sensoreinrichtung kann zum Beispiel eine Mehrzahl von vertikal versetzt angeordneten dedizierten Sensoreinheiten SEx verwendet werden, die jede ihren "eigenen" Detektionsbereich hat. Dazu kann zum Beispiel ein Sensor mit einer Laserdiode verwendet werden, welcher darüber hinaus eine Empfangsoptik umfasst, mit welcher von einer Oberfläche eines Regalbodens zurückgeworfene bzw. gestreute Teile des Laserlichts erfasst werden können. Indem eine Mehrzahl von vertikal versetzten Sensoreinheiten mit dazugehörigen Detektionsbereichen verwendet wird, kann die relative Position des Regalbodens zu dem Greifer ermittelt werden.

Alternativ kann zum Beispiel ein Matrixsensor mit einer Mehrzahl von Sensoreinheiten mit jeweils zugeordnetem Detektionsbereich verwendet werden. Unter den Begriff der Sensoreinrichtung soll auch eine Kamera fallen, deren ermitteltes Bild von einer Steuereinrichtung zur Ermittlung der Ausrichtung in mehrere "künstliche" Detektionsbereiche aufgeteilt wird.

In Abhängigkeit von der Anzahl und gegebenenfalls Höhe der Detektionsbereiche ist es beispielsweise denkbar, dass nur für den Fall, dass ein Regalboden in beispielsweise dem zweiten Detektionsbereich von oben ermittelt wird, eine fehlerfreie Bewegung eines Stückgutes von der Auflagefläche eines Regalbodens auf die Auflagefläche des Ablagetisches möglich ist. Wird beispielsweise der Regalboden in einem Detektionsbereich unterhalb des "idealen" Detektionsbereichs ermittelt, bedeutet dies, dass der Regalboden durchgebogen ist und eine fehlerlose Bewegung eines Stückgutes auf den Ablagetisch nicht gewährleistet ist. In einem solchen Fall wird der Greifer um einen entsprechenden Z-Betrag herabgefahren und anschließend die Auslagerung durchgeführt.

Mit dem erfindungsgemäßen Greifer mit Sensoreinrichtung mit der Mehrzahl von Detektionsbereichen in dem zumindest einen Endbereich des Greifers ist es also möglich, bereits vor dem Durchführen einer Ein- oder Auslagerung zu ermitteln, ob diese potenziell fehlerfrei durchführbar ist, oder ob ein gegebenenfalls vorhandener Versatz zwischen den Auflageflächen des Regalbodens und des Ablagetisches durch eine Justierung der Z-Position des Greifers zu beheben ist. Ein solcher Versatz ist aber nicht in jedem Fall störend - bei dem Bewegen von Kleinstückgüter auf einen Regalboden kann die Oberfläche des Regalbodens geringfügig unter der Auflagefläche des Ablagetisches angeordnet sein, ohne dass dies die Bewegung der Packung von dem Ablagetisch auf den Regalboden stört. Bei einer Bewegung einer Packung auf den Ablagetisch stört es nicht, wenn dieser geringfügig tiefer als der Regalboden angeordnet ist.

Anders als dies bei bekannten Greifern der Fall ist, wird die Ein- oder Auslagerung also nicht erst versucht und die Greiferposition bei fehlerhafter Ein- oder Auslagerung korrigiert, sondern ein gegebenenfalls vorhandener Versatz sofort erkannt und ggf. korrigiert. Da das Erkennen des Versatzes unmittelbar nach Anfahren der Sollposition des Greifers innerhalb kürzester Zeit durchführbar ist, ermöglicht es der erfindungsgemäße Greifer, Kleinstückgüter schneller und mit weniger Fehlbewegungen ein- und auszulagern.

Ein Vorteil der Erfindung ist ferner, dass bekannte Greifer durch Einbau einer entsprechend ausgebildeten Sensoreinrichtung kostengünstig und ohne großen Aufwand angepasst werden können. Die Erfindung kann bei Greifern verwendet werden, die die Kleinstückgüter über lediglich einen Endbereich aus- und einlagern, aber auch bei solchen, deren Ablagetische zwei Endbereiche aufweisen, über welche aus- und eingelagert wird. In letzterem Fall ist es dann sinnvoll (aber nicht zwingend notwendig), bei beiden Endbereichen eine Sensoreinrichtung vorzusehen. Im nachfolgenden wird lediglich von einer Sensoreinrichtung gesprochen, entsprechende Ausführungen gelten aber auch dann, wenn zwei Sensoreinrichtungen verbaut sind.

Welche Transporteinrichtung zum Bewegen von Kleinstückgütern bei dem erfindungsgemäßen Greifer verwendet wird, ist für die Erfindung nicht wesentlich. So können beispielsweise Transporteinrichtungen verwendet werden, die ein Kleinstückgut hintergreifen und dann von dem Regalboden auf den Ablagetisch des Greifers ziehen. Bei einer bevorzugten Ausführungsform, die konstruktiv sehr einfach gehalten ist, ist es vorgesehen, dass die Transporteinrichtung zwei über dem Ablagetisch angeordnete langgestreckte, sich in X-Richtung erstreckende Greifbacken mit einander zugewandten Innenflächen umfasst, wobei zumindest eine der Greifbacken zusätzlich zumindest abschnittsweise in der zweiten horizontalen Richtung bewegbar ist. Optional ist zumindest eine der Greifbacken zusätzlich verschwenkbar.

Um bei einer fehlerhaften Sensoreinrichtung die Funktionsfähigkeit des Greifers rasch und einfach wiederherstellen zu können, ist es bei einer bevorzugten Ausführungsform des Greifers vorgesehen, dass die Sensoreinrichtung als eine von dem Ablagetisch lösbare Sensorbaugruppe ausgebildet ist.

Für den Fall, dass mit der Sensoreinrichtung lediglich ein Durchbiegen eines Regalbodens ermittelt werden soll, also lediglich der Fall abgedeckt werden soll, dass der Regalboden "unterhalb" der erwarteten Position ist, ist es ausreichend, dass sich die Detektionsbereiche unterhalb der Ebene der Auflagefläche des Ablagetisches erstrecken. In Abhängigkeit von der Verfahrensführung, die nachfolgend genauer beschrieben wird, ist es jedoch auch denkbar, dass die einem Regalboden zugeordnete Sollposition im Hinblick auf die Z-Position angepasst wird, sobald ein Durchbiegen eines Regalbodens festgestellt wird. Auf diese Weise kann erreicht werden, dass die Sollposition eines Regalbodens bei der nächsten Aus- oder Einlagerung optimal angefahren wird, ohne dass eine nachfolgende Justierung hinsichtlich der Z-Position notwendig ist.

Eine Auslagerung eines Kleinstückgutes (oder eine gegebenenfalls notwendige manuelle Entnahme eines oder mehrerer Kleinstückgüter) kann jedoch auch bewirken, dass die Durchbiegung eines Regalbodens nachlässt, d. h. sich die Z-Position des Regalbodens wieder der ursprünglichen Z-Position annähert. Wird das Verfahren zum Betreiben der Kommissioniervorrichtung derart betrieben, dass eine Anpassung der Sollposition für einen vorgegebenen Regalboden stattfindet, ist es bei einer bevorzugten Ausführungsform des Greifers vorgesehen, dass die Sensoreinrichtung derart angeordnet ist, dass sich zumindest ein Detektionsbereich DBx vertikal über die Auflagefläche erstreckt.

Die Aufgabe wird ferner gelöst durch ein Verfahren zum Betreiben einer Kommissioniervorrichtung gemäß Patentanspruch 5.

Die zum Durchführen des Verfahrens benutzte Kommissioniervorrichtung umfasst eine Mehrzahl von horizontalen Regalböden und zumindest einen vor den horizontalen Regalböden verfahrbaren erfindungsgemäßen Greifer.

Erfindungsgemäß wird der Greifer in eine einem Regalboden RBx zugeordnete Sollposition SPx bewegt. Auf diesem vorgegebenen Regalboden kann ein Kleinstückgut angeordnet sein, welches auf den Ablagetisch bewegt werden soll. Alternativ kann auf dem Ablagetisch ein Kleinstückgut angeordnet sein, welches auf den vorgegebenen Regalboden zu bewegen ist. Wie bereits oben dargelegt, kann es aufgrund einer möglichen Durchbiegung eines Regalbodens vorkommen, dass die Auflagefläche des Ablagetisches nicht mit der Auflagefläche des Regalbodens an der Sollposition fluchtet, so dass es nicht gewährleistet ist, dass ein Kleinstückgut mittels der Transporteinrichtung von dem Regalboden auf den Ablagetisch bewegbar ist, da aufgrund der Durchbiegung des Regalbodens eine Kante ausgebildet sein kann, die die Bewegung hemmt.

Erfindungsgemäß wird daher vor dem Bewegen eines Kleinstückgutes eine aktuelle Ausrichtung des Greifers in Bezug auf den vorgegebenen Regalboden RBx ermittelt, und zwar indem geprüft wird, in welchem bzw. welchen Detektionsbereich(en) DBx ein Vorhandensein des Regalbodens erkannt wird. Basierend darauf, in welchen Detektionsbereichen das Vorhandensein des Regalbodens erkannt wird, wird ermittelt, ob die aktuelle Ausrichtung des Greifers an dem vorgegebenen Regalboden RBx in Bezug auf die Z-Position (wobei diese Position der Sollposition SPx entspricht) einer vorgegebenen Ausrichtung entspricht. Dies bedeutet, dass ermittelt wird, ob die Auflagefläche des Auflagetisches derart an der Auflagefläche des Regalbodens ausgerichtet ist, dass ein fehlerloses Bewegen eines Kleinstückgutes möglich ist. Wie genau dies im Einzelnen durchgeführt wird, ist bei der detaillierten Beschreibung einer bevorzugten Ausführungsform des Verfahrens dargelegt.

Sofern ermittelt wird, dass die aktuelle Ausrichtung des Greifers in Bezug auf die Z-Position nicht einer vorgegebenen Ausrichtung entspricht (das heißt sich die Z-Position der Auflagefläche des Regalbodens oberhalb oder unterhalb der Z-Position der Auflagefläche des Ablagetisches befindet), wird der Greifer entsprechend einer negativen oder positiven Abweichung zwischen aktueller Ausrichtung AA und der vorgegebenen Ausrichtung VA in Z-Richtung verfahren.

Für den Fall, dass der Regalboden aufgrund der Belegung mit Kleinstückgütern durchgebogen ist, bedeutet dies, dass bei der Ermittlung, ob die aktuelle Ausrichtung des Greifers an dem vorgegebenen Regalboden in Bezug auf die Z-Position einer vorgegebenen Ausrichtung entspricht, eine "negative Abweichung" festgestellt wird, so dass der Greifer um den Betrag der ermittelten negativen Abweichung in Z-Richtung nach "unten" bewegt wird, um den Greifer an dem durchgebogenen Regalboden auszurichten. Sobald dies passiert ist, kann ein Kleinstückgut (in diesem Fall) ausgelagert werden. Ob eine "negative Abweichung" eine Abweichung nach unten oder oben darstellt, ist abhängig von der Bezeichnung bzw. Nummerierung der Z-Achse. Üblicherweise entspricht die unterste Z-Position dabei der 0-Position.

Mit dem erfindungsgemäßen Verfahren ist es möglich, bereits vor dem Bewegen eines Kleinstückgutes von einem oder auf einen Regalboden zu ermitteln, ob diese Bewegung potenziell fehlerfrei durchgeführt werden kann. Diese Ermittlung kann sehr schnell durchgeführt werden, so dass für den Fall, dass eine nichttolerierbare Abweichung vorliegt, der Greifer rasch nachpositioniert werden kann. Um das Nachpositionieren des Greifers jedoch weitgehend zu vermeiden (und bei Annahme, dass die Entnahme lediglich eines Kleinstückgutes die Durchbiegung eines Regalbodens nicht wesentlich beeinflusst), ist es bei einer bevorzugten Ausführungsform des Verfahrens vorgesehen, dass bei Vorliegen einer Abweichung zwischen aktueller Ausrichtung AA und vorgegebener Ausrichtung VA die Sollposition SPx zu einem vorgegebenen Regalboden RBx anhand der negativen oder positiven Abweichung angepasst wird. In einem solchen Fall wird der Greifer dann, wenn der gleiche Regalboden erneut angefahren wird, gleich auf die angepasste Sollposition SPx verfahren, wobei man dann davon ausgehen kann, dass bei der Prüfung, ob die aktuelle Ausrichtung des Greifers an den vorgegebenen Regalboden in Bezug auf die Z-Position einer vorgegebenen Ausrichtung entspricht, diese Ermittlung bzw. Prüfung positiv ausfällt.

Eine Durchbiegung eines Regalbodens ist grundsätzlich nicht erwünscht, da es zu einer Erhöhung der Gefahr von Fehlaus- und -einlagerungen führt. In Abhängigkeit von dem Material eines Regalbodens kann eine Durchbiegung über einen längeren Zeitraum ferner bewirken, dass das Material des Regalbodens Schaden nimmt oder der Regalboden dauerhaft durchgebogen bleibt. Bei einer bevorzugten Ausführungsform des erfindungsgemäßen Verfahrens ist es daher vorgesehen, dass bei Vorliegen einer negativen Abweichung zwischen aktueller Ausrichtung AA und vorgegebener Ausrichtung VA der vorgegebene Regalboden RBx als umzulagernder Regalboden markiert wird. Der als umzulagernder Regalboden markierte kann dann, wenn die Kommissioniervorrichtung nicht im Regelbetrieb betrieben wird, aus- bzw. umgelagert werden, um der Durchbiegung des Regelbodens entgegenzuwirken.

Das Durchbiegen eines Regalbodens verhindert aber nicht nur ein problemloses Auslagern eines Kleinstückgutes - auch die maximale Einlagerungshöhe bei einem Lagerplatz unterhalb des vorgegebenen Regalbodens ist vermindert. Bei einer bevorzugten Ausführungsform des Verfahrens wird bei Vorliegen einer Abweichung zwischen aktueller Ausrichtung AA und vorgegebener Ausrichtung VA die Abweichung zur Anpassung einer maximalen Einlagerungshöhe eines Regalbodens unterhalb des aktuellen angefahrenen Regalbodens verwendet.

Ein Regalboden ist regelmäßig so breit (in Y-Richtung), dass eine Vielzahl von Lagerplätzen pro Regalboden vorhanden ist. Das Durchbiegen betrifft aber nicht nur einen Teilbereich eines Regalbodens, sondern regelmäßig sämtliche Lagerplätze pro Regalboden, wobei die mittleren Lagerplätze stärker betroffen sind. Um bei einem Regalboden das Anfahren von Sollpositionen "mit Abweichung" zu minimieren, ist es bei einer bevorzugten Ausführungsform vorgesehen, dass bei Vorliegen einer Abweichung zwischen aktueller Ausrichtung AA und vorgegebener Ausrichtung VA der gesamte vorgegebene Regalboden RBx mit dem Greifer in Y-Richtung abgefahren wird und für sämtliche der dem vorgegebenen Regalboden RBx zugeordneten Lagerplätze die Abweichung zwischen aktueller Ausrichtung AA und vorgegebener Ausrichtung bestimmt wird und die den Lagerplätzen zugeordneten Sollpositionen entsprechend angepasst werden.

Bei einer alternativen Ausführungsform ist es vorgesehen, dass bei Vorliegen einer Abweichung zwischen aktueller Ausrichtung AA und vorgegebener Ausrichtung VA auf der Basis dieser Abweichung die Abweichungen für sämtliche Lagerplätze des Regalbodens rechnerisch ermittelt werden und die den Lagerplätzen zugeordneten Sollpositionen entsprechend angepasst werden. Zwar ist die rechnerische Ermittlung nicht so genau wie das vorgenannte Abfahren des Regalbodens in Y-Richtung, erspart aber eine Menge Zeit und ist insbesondere dann sinnvoll, wenn die Kommissioniervorrichtung in Betrieb ist und das Abfahren das Aus- und Einlagern stören würde.

Bei einer weiteren bevorzugten Ausführungsform ist es ferner vorgesehen, dass die ermittelten Abweichungen zwischen aktueller Ausrichtung und vorgegebener Ausrichtung verwendet werden, um die maximalen Einlagerungshöhen bei sämtlichen Lagerplätzen des Regalbodens unterhalb des vorgegebenen Regalbodens anzupassen.

Im Nachfolgenden wird eine bevorzugte Ausführungsform des erfindungsgemäßen Greifers sowie eine bevorzugte Ausführungsform des erfindungsgemäßen Verfahrens unter Bezugnahme auf die Zeichnung beschrieben, in welcher
Figuren 1a und 1b Schrägansichten der bevorzugten Ausführungsform des erfindungsgemäßen Greifers zeigen,
Figuren 2a und 2b Detailansichten des Endabschnittes des Ablagetisches des erfindungsgemäßen Greifers zeigen, wobei Figur 2a eine Schrägansicht und Figur 2b eine Frontalansicht zeigen,
Figur 3 eine Schrägansicht des erfindungsgemäßen Greifers ohne Ablagetisch und Gehäuse der Bewegungsmechanik der Transporteinrichtung zeigt,
Figuren 4a und 4b Detailansichten der Bewegungsmechanik der Transporteinrichtung der bevorzugten Ausführungsform zeigen, wobei Figur 4a eine Draufsicht und Figur 4b eine Untersicht zeigt,
Figuren 5a und 5b die Ausrichtung des Greifers an einem nicht durchgebogenen Regalboden veranschaulichen, wobei Figur 5a eine Seitenansicht und Figur 5b eine Vorderansicht zeigt,
Figuren 6a und 6b die Ausrichtung des Greifers an einem durchgebogenen Regalboden veranschaulichen, wobei Figur 6a eine Seitenansicht und Figur 6b eine Vorderansicht zeigt,
Figuren 7a - 7c schematisch verschiedene Ein- und Auslagerungsszenarien zeigen, anhand welcher eine bevorzugte Ausführungsform des erfindungsgemäßen Verfahrens demonstriert wird, und
Figur 8 ein Ablaufschema der bevorzugten Ausführungsform des erfindungsgemäßen Verfahrens zeigt.

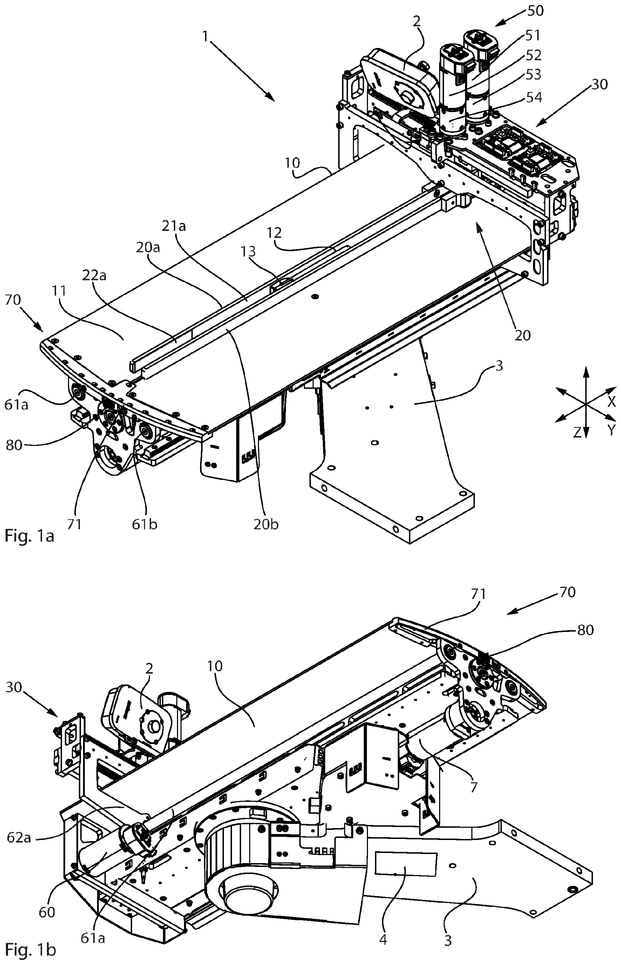

Figuren 1a und 1b zeigen zwei Schrägansichten einer bevorzugten Ausführungsform des erfindungsgemäßen Greifers 1, wobei Figur 1a eine Schrägansicht von oben und Figur 1b eine Schrägansicht von unten zeigt. Der erfindungsgemäße Greifer 1 ist Teil eines (nicht dargestellten) Bediengerätes für eine Kommissioniervorrichtung und umfasst einen Ablagetisch 10 mit einem Endabschnitt 70 sowie eine Transporteinrichtung 20, die bei dieser Ausführungsform u. a. zwei Klemmbacken 20a, 20b mit gegenüberliegenden Klemmflächen 21a, 21b umfasst. Bei ihren freien Enden weisen die Klemmbacken 20a, 20b einen Abschnitt 22a auf, der mit einem rutschhemmenden Material beschichtet ist.

Bei den freien Enden der Klemmbacken weist der Ablagetisch 10 einen Endabschnitt 70 auf, der bei dieser Ausführungsform als separate Baugruppe ausgebildet ist und eine als Sensorbaugruppe 80 ausgebildete Sensoreinrichtung mit einer Mehrzahl von Sensoreinheiten umfasst. Die Sensorbaugruppe 80 ist unterhalb einer von Ablagetisch und Endabschnitt definierten Auflagefläche 11 angeordnet. Mit der Sensorbaugruppe kann die Ausrichtung des Greifers an einem (nicht dargestellten) Regalboden ermittelt werden - dies wird in nachfolgenden Figuren detaillierter beschrieben.

Der Endabschnitt umfasst eine Ein- und Auslagerungsstirnseite 71. Bei der gezeigten Ausführungsform ist der Endabschnitt als lösbare Baugruppe ausgebildet, alternativ kann der "Endabschnitt" auch lediglich einen Abschnitt des Ablagetisches kennzeichnen. Der Ablagetisch umfasst mittig eine langgestreckte Öffnung, die sich in Ein- und Auslagerungsrichtung, d. h. in der ersten horizontalen Richtung X, erstreckt. In der Öffnung ist ein Schiebeelement 12 mit einem verbreiterten Schiebekopf 13 angeordnet. Das Schiebeelement 12 kann in der langgestreckten Öffnung in Ein- und Auslagerungsrichtung bzw. der ersten horizontalen Richtung bewegt werden.

Gegenüber des Endabschnitts ist bei der gezeigten Ausführungsform eine Klemmbackenführungsanordnung 30 angeordnet, mit welcher die Klemmbacken 20a, 20b verbunden sind und welche eine Mechanik zum Verfahren und Verschwenken der Klemmbacken umfasst. Im oberen Abschnitt umfasst die Klemmbackenführungsanordnung 30 eine Antriebseinheit 50 mit zwei Antrieben 51, 52 sowie zugeordneten Getrieben 53, 54. Über diese beiden Antriebe werden bei der gezeigten Ausführungsform die Klemmbacken verfahren und geschwenkt, wie dies unter Bezugnahme auf nachfolgende Figuren detaillierter beschrieben wird. Auf der Klemmbackenführungsanordnung ist eine optische Erfassungseinrichtung 2 angeordnet, mit welcher bei dem Ein- und Auslagerungsvorgang verschiedene Aspekte überwacht werden können.

Die Klemmbackenführungsanordnung 30 sowie sämtliche ihrer elektronischen Bauteile sind mit einer Steuereinrichtung 4 verbunden, die bei der gezeigten Ausführungsform unterhalb eines Befestigungsarmes 3 angeordnet ist. Der Befestigungsarm 3 selbst ist an dem Ablagetisch bzw. an einem Unterbau des Ablagetisches über ein Drehgelenk befestigt.

Zur Ein- und Auslagerung von Packungen muss die Klemmbackenführungsanordnung 30 in der ersten horizontalen Richtung (X-Richtung) bzw. der Ein- und Auslagerungsrichtung bewegt werden. Dazu ist bei der gezeigten Ausführungsform unterhalb des Ablagetisches ein Antrieb 60 angeordnet. Dieser ist über ein Getriebe mit einem Linearantrieb 61a, 62a gekoppelt, mittels welchem die Klemmbackenführungsanordnung in X-Richtung bewegt wird. Unter dem Ablagetisch ist ferner ein Antrieb 7 angeordnet, welcher das Schiebeelement 12 antreibt.

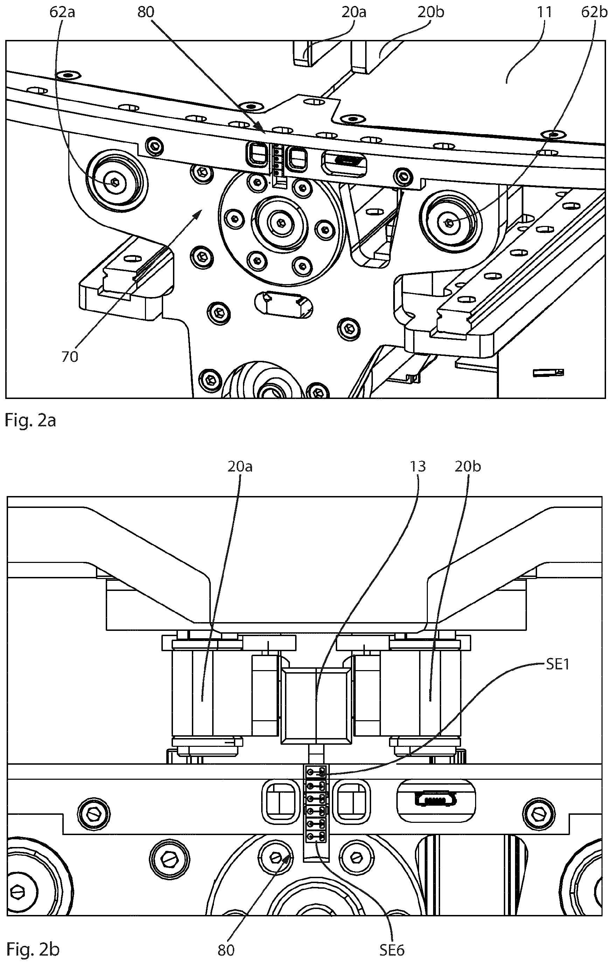

Figuren 2a und 2b zeigen Detailansichten des Endabschnittes des Ablagetisches des erfindungsgemäßen Greifers, wobei Figur 2a eine Schrägansicht und Figur 2b eine Frontalansicht zeigt. In den Figuren 2a und 2b ist genauer zu erkennen, dass und wie in dem als separates Bauteil ausgebildeten Endabschnitt 70 die Sensorbaugruppe 80 unterhalb der Auflagefläche 11 angeordnet ist. In Figur 2b ist zu erkennen, dass die Sensorbaugruppe 80 bei der gezeigten Ausführungsform sechs Sensoreinheiten SE1 - SE6 umfasst.

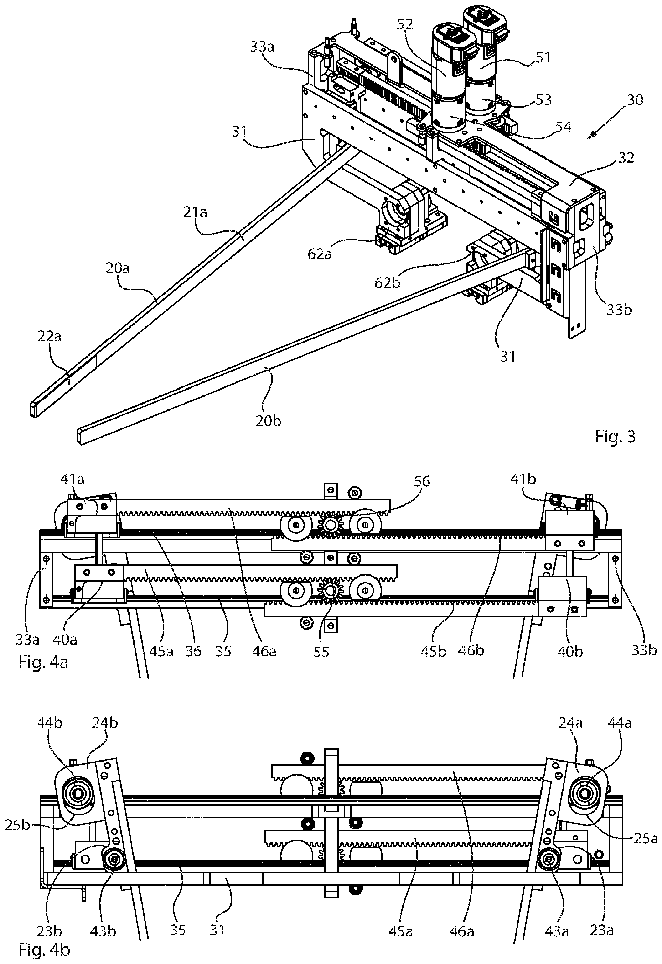

Figur 3 zeigt eine Schrägansicht der Klemmbackenführungsanordnung 30 der bevorzugten Ausführungsform des Greifers, bei welcher beide Klemmbacken 20a, 20b zum Greifen geschwenkt sind. Die Klemmbackenführungsanordnung 30 umfasst eine Rahmenstruktur 31, 32, 33a, 33b, wobei das vordere Bauteil 31 die Klemmbacken (und den nicht dargestellten Ablagetisch) umgreift. Bei den unteren Enden des Bauteiles 31 sind bewegliche Teile 62a, 62b (die "Läufer") eines Linearantriebes befestigt, mit welchen die Klemmbackenführungsanordnung 30 in der ersten horizontalen Richtung bewegt werden kann. Die Bauteile werden als "beweglich" bezeichnet, da sie sich zusammen mit der Klemmbackenführungsanordnung entlang entsprechender feststehender Teile (die zum Bewegen der beweglichen Teile gedreht werden) in der ersten horizontalen Richtung bewegen. Die feststehenden Teile 61a, 61b (siehe Figuren 1a, 1b) selbst können sich zum Bewegen der beweglichen Teile ebenfalls bewegen, beispielweise indem sie sich drehen, wobei bei dieser Drehbewegung die beweglichen Teile entlang der Längsachse der feststehenden Teile bewegt werden, die unbeweglichen Teile aber bezogen auf die Position im Greifer ortsfest sind. Bei einer alternativen Ausführungsform ist es beispielsweise denkbar, dass die feststehenden Teile als Zahnriemen ausgebildet sind, die zwischen den Längsenden des Greifers ausgebildet sind und mit entsprechenden Umlenkrollen zum Bewegen der beweglichen Teile zusammenwirken.

Wie es Figur 4a zu entnehmen ist, erstrecken sich zwischen den seitlichen Rahmenstrukturbauteilen 33a, 33b in einer zweiten horizontalen Richtung Y parallel zueinander und in der ersten horizontalen Richtung X beabstandet voneinander zwei Führungen 35, 36, eine erste Führung 35 und eine zweite Führung 36, wobei die erste Führung den freien Enden der Klemmbacken zugewandt ist. An jeder der Führungen 35, 36 sind zwei Klemmbackenschlitten 40a, 40b; 41a, 41b angeordnet; zwei erste Klemmbackenschlitten 40a, 40b an der ersten Führung 35, zwei zweite Klemmbackenschlitten 41a, 41b an der zweiten Führung 36. Bei der dargestellten Ausführungsform des erfindungsgemäßen Greifers umgreift ein Abschnitt der Klemmbackenschlitten einen Vorsprung der Führungen 35, 36, so dass die Klemmbackenschlitten auf diesem Vorsprung teilweise aufliegen.

In den Figuren 4a und 4b ist zu erkennen, dass die Klemmbackenschlitten 40a, 40b; 41a, 41b mit Antriebselementen 45a, 45b; 46a, 46b verbunden sind, die bei der gezeigten Ausführungsform als Zahnstangen ausgebildet sind. Die der ersten Führung 35 bzw. den entsprechenden ersten Klemmbackenschlitten 40a, 40b zugeordneten Antriebselemente 45a, 45b sowie die entsprechenden der zweiten Führung 36 zugeordneten Antriebselemente 46a, 46b sind bezogen auf die Zahnelemente der Zahnstangen derart ausgerichtet, dass sich die Zahnelemente gegenüberliegen und bei ihren freien Enden einen Überlappungsbereich bilden. Mittig in dem Überlappungsbereich der Antriebselemente bzw. Zahnstangen ist jeweils ein Antriebszahnrad 55, 56 angeordnet, welches über ein (in den Figuren 4a und 45b nicht dargestelltes) Getriebe 53, 54 mit einem Antrieb 51, 52 gekoppelt ist. Der Abstand zwischen den Klemmbackenschlitten 40a, 40b; 41a, 41b einer Führung und dem entsprechenden Antriebszahnrad ist identisch, ein Antriebszahnrad ist also genau mittig zwischen zwei Klemmbackenschlitten angeordnet, so dass eine Bewegung des Antriebszahnrades synchrone Bewegungen der Klemmbackenschlitten bewirkt. Bei einer Drehung des Antriebszahnrades werden die Klemmbackenschlitten also synchron aufeinander zu oder voneinander weg bewegt, wobei entsprechendes für die den beiden Führungen 35, 36 zugeordneten Klemmbackenschlitten gilt.

Die Klemmbackenschlitten der ersten Führung können also simultan oder getrennt hinsichtlich der Klemmbackenschlitten der zweiten Führung bewegt werden, so dass eine große Flexibilität hinsichtlich der Bewegung der Klemmbackenschlitten besteht. Die Klemmbackenschlitten der ersten bzw. zweiten Führung können synchron bewegt werden, oder es können nur die der ersten oder der zweiten Führung zugeordneten Klemmbackenschlitten bewegt werden. Auf diese Weise ist es möglich, die an den Klemmbackenschlitten befestigten Klemmbacken parallel oder bereits geschwenkt simultan ohne Winkelverstellung zu verfahren (indem die Klemmbackenschlitten beider Führungen simultan bewegt werden), oder, wenn lediglich die Klemmbackenschlitten einer Führung bewegt werden, die Klemmbacken zu schwenken.

Wie bereits ausgeführt, sind die Klemmbacken 20a, 20b mit der Klemmbackenführungsanordnung 30 gekoppelt. Diese Kopplung ist in Figur 4b zu erkennen. Bei der gezeigten Ausführungsform sind die Klemmbacken 20a, 20b jeweils über ein Drehgelenk 23a, 43a; 23b, 43b mit den Klemmbackenschlitten 40a, 40b der ersten Führung 35 und über eine Langlochführung 24a, 25a, 44a; 24b, 25b, 44b mit den Klemmbackenschlitten 41a, 41b der zweiten Führung 36 verbunden. Bei alternativen Ausführungsformen kann das Drehgelenk auch bei den der zweiten Führung zugeordneten Klemmbackenschlitten angeordnet sein, in diesem Fall ist es dann bei der dargestellten Kombination erforderlich, dass die Langlochführungen bei den der ersten Führung 35 zugeordneten Klemmbackenschlitten angeordnet sind.

Eine Verwendung der Kombination Drehgelenk/Langlochführung ist jedoch nicht zwingend. Zwar müssen die Klemmbacken bei zumindest einer Führung mittels eines Dreh- bzw. Schwenkgelenkes an den entsprechenden Klemmbackenschlitten gehalten sein, die Verwendung einer Langlochführung ist jedoch nicht zwingend erforderlich. So ist es beispielsweise denkbar, dass die Klemmbacken bei einer alternativen Ausführungsform mit den Klemmbackenschlitten gegen eine Rückstellkraft bewegt werden, und bei einem Rückfahren der Klemmbackenschlitten die Rückstellkraft die Klemmbacken zurückbewegt.

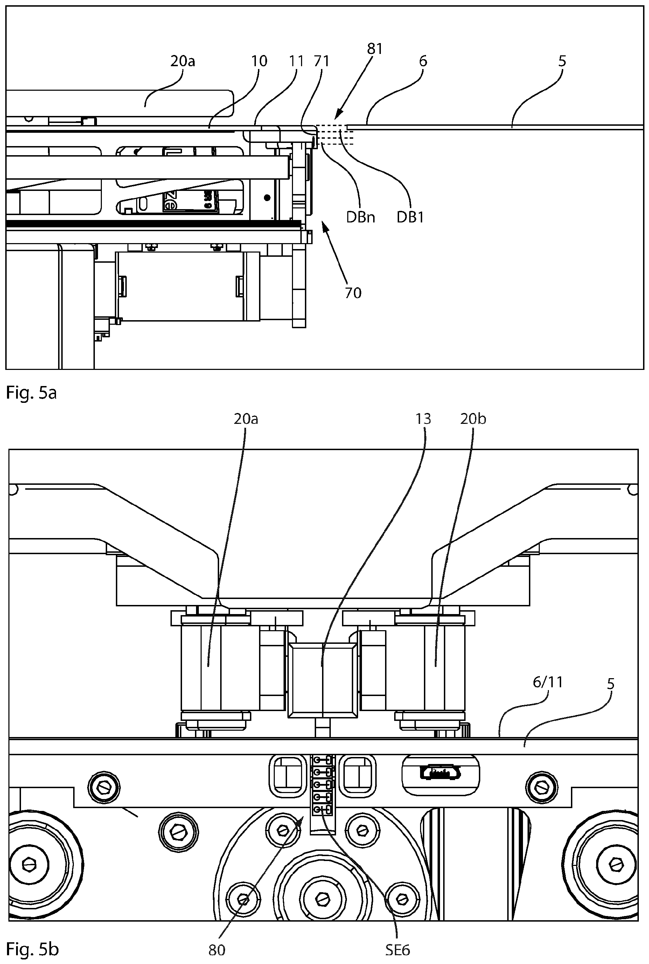

Figuren 5a und 5b veranschaulichen die Ausrichtung des Greifers an einem nicht durchgebogenen Regalboden, wobei Figur 5a eine Seitenansicht und Figur 5b eine Frontalansicht zeigt. Wie in Figur 5a zu erkennen ist, ist eine Auflagefläche 6 eines Regalbodens 5 derart "passend" an der Auflagefläche 11 des Ablagetisches 10 ausgerichtet, dass ein Bewegen eines Kleinstückgutes von oder auf den Regalboden problemlos möglich ist. Bei der gezeigten schematischen Ansicht reicht der Regalboden nur in den Detektionsbereich DB1 hinein, was bei der Ermittlung der Ausrichtung derart interpretiert wird, dass kein Nachjustieren des Greifers im Hinblick auf die Z-Achse bzw. Z-Richtung (Vertikalachse) notwendig ist. In Figur 5b ist eine entsprechende Frontalansicht wiedergegeben, wobei von "hinter" dem Regalboden auf den Greifer geblickt wird. Man erkennt, dass die Auflageflächen 6 und 11 des Regalbodens 5 und des Auflagetisches 10 miteinander fluchten bzw. auf der im wesentlichen gleichen Z-Position sind.

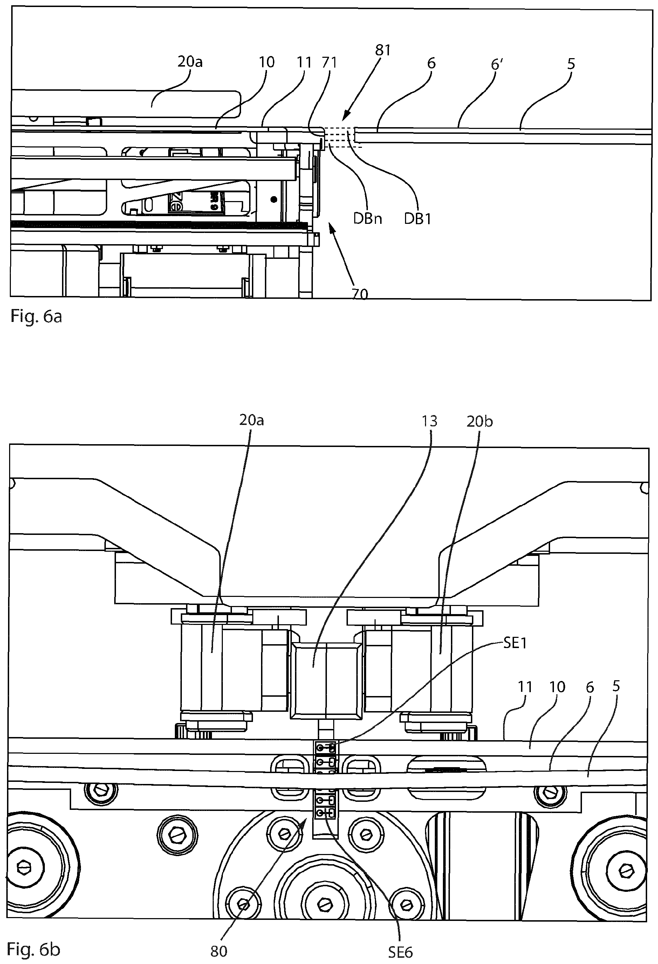

Anders verhält es sich bei der in den Figuren 6a und 6b gezeigten Situation - der Regalboden 5 ist durchgebogen, der Regalboden wird in dem Detektionsbereich DB1 - DBn bzw. 81 nicht (nur) in dem Detektionsbereich DB1, sondern auch (in Figur 6a) in dem Detektionsbereich DB2 erkannt, was eine Durchbiegung und eine Notwendigkeit der Korrektur der Z-Position des Greifers anzeigt. In der Frontalansicht gemäß Figur 6b ist das in Figur 6a schematisch Gezeigte wiederholt, man kann jedoch genauer erkennen, wie sich eine Durchbiegung auswirkt - die Auflagefläche 6 des Regalbodens 5 fluchtet nicht mehr mit der Auflagefläche 11 des Ablagetisches 10, sondern ist in dem Bereich vor den Sensoreinheiten SE3 und SE4 angeordnet. Eine Auswertung der Sensoreinheiten/Detektionsbereiche ergibt in diesem Fall, dass der Greifer zum Auslagern eines Kleinstückgutes auf den Ablagetisch in etwa um den Betrag in Z-Richtung nach "unten" verfahren werden muss, der der Höhe von zwei Detektionsbereichen entspricht.

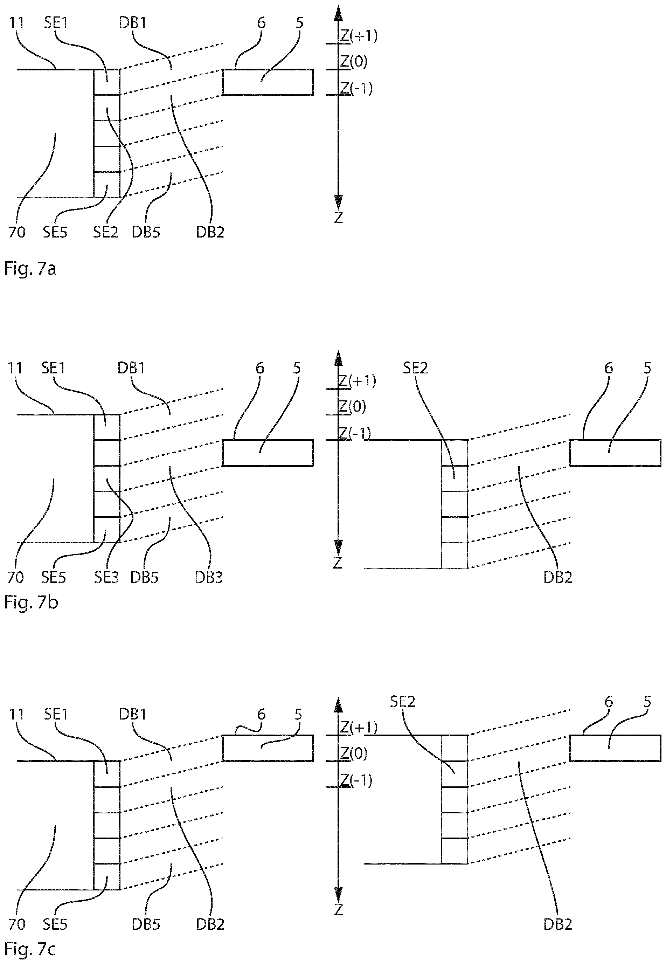

Figuren 7a - 7c veranschaulichen schematisch verschiedene Ein- und Auslagerungsszenarien. Der in den Figuren 7a - 7c schematisch abschnittsweise angedeutete Greifer umfasst fünf Sensoreinheiten SE1 - SE5 mit entsprechenden Detektionsbereichen DB1 - DB5, wobei die Sensoreinheiten derart ausgerichtet sind, dass die Detektionsbereiche nicht parallel zu der Auflagefläche 11 verlaufen, sondern leicht ansteigend sind. Dies bedingt, dass der Detektionsbereich DB1 einen Bereich oberhalb der Auflagefläche 11 abdeckt. Bei dem Szenario in Figur 7a ist der Regalboden nicht durchgebogen, der Greifer ist ideal an dem Regalboden ausgerichtet. Aufgrund der Ausrichtung der Detektionsbereiche bedeutet dies, dass der Regalboden nur in Detektionsbereich DB2 erkannt wird. Bei der Ermittlung der Ausrichtung wird dies als "keine Abweichung" erkannt (was natürlich eine entsprechende Vorgabe an eine Steuereinheit voraussetzt - bei alternativen Ausführungsformen kann dies auch eine Durchbiegung kennzeichnen).

Bei Figur 7b liegt eine Durchbiegung vor - nach dem Bewegen des Greifers in die Sollposition ist dieser nicht ideal an dem Regalboden ausgerichtet, was dadurch erkannt wird, dass der Regalboden in dem Detektionsbereich DB3 ermittelt wird, was eine negative Abweichung von der Sollposition bedeutet. Dies hat zur Folge, dass der Greifer aus der Sollposition Z(0) in die angepasste Z-Position Z(-1) verfahren wird. Sobald der Greifer in dieser Z-Position angekommen ist, wird der Regalboden wieder in dem Detektionsbereich DB2 erkannt - die Ausrichtung ist damit ideal, ein Kleinstückgut kann ausgelagert werden.

Figur 7c zeigt ein Szenario, bei welchem die Sollposition nach einem Erkennen einer Durchbiegung angepasst wurde (beispielsweise in Reaktion auf das Szenario nach Figur 7b). Bei der Ermittlung der Ausrichtung wird festgestellt, dass der Regalboden im Detektionsbereich DB1 erkannt wird - dies bedeutet bei der beschriebenen Ausführungsform, dass die Z-Position des Greifers geringer als die des Regalbodens ist - beispielsweise weil die letzte Auslagerung so viel Gewicht entfernt hat, dass sich die Durchbiegung verminderte. Wird dies ermittelt, wird der Greifer von Position Z(0) in die Position Z(+1) verfahren und diese neue Z-Position als neue Sollposition des Greifers für den fraglichen Regalboden gespeichert.

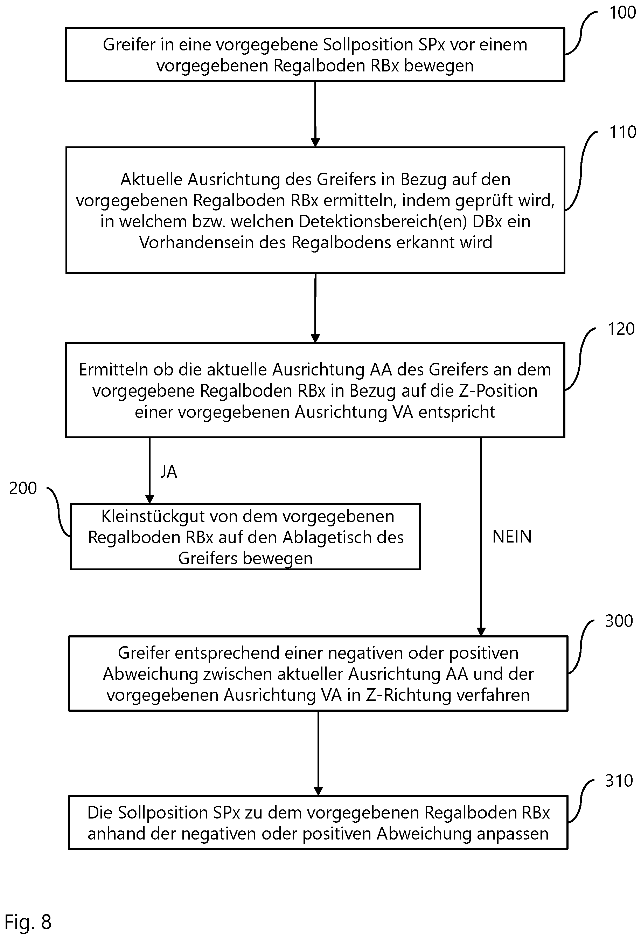

Figur 8 zeigt ein Ablaufdiagramm einer bevorzugten Ausführungsform des erfindungsgemäßen Verfahrens. Zunächst wird in einem Schritt 100 der Greifer in eine vorgegebene Sollposition SPx vor einem vorgegebenen Regalboden RBx bewegt. Auf diesem vorgegebenen Regalboden RBx ist ein Kleinstückgut angeordnet, welches ausgelagert werden soll, wozu es zunächst auf den Ablagetisch des Greifers bewegt werden muss. Auf welchem Regalboden das Kleinstückgut angeordnet ist, wird anhand einer Abfrage einer Datenbank ermittelt. Sobald der fragliche Regalboden ermittelt ist, wird dessen aktuelle Sollposition ermittelt und der Greifer verfahren.

Sobald der Greifer die Sollposition erreicht hat, wird in einem Schritt 110 die aktuelle Ausrichtung des Greifers in Bezug auf den vorgegebenen Regalboden RBx ermittelt, indem geprüft wird, in welchem bzw. welchen Detektionsbereich(en) DBx ein Vorhandensein des Regalbodens erkannt wird (siehe dazu Ausführungen zu den Figuren 7a - 7c). In einem Schritt 120 wird dann ermittelt, ob die aktuelle Ausrichtung des Greifers an dem vorgegebenen Regalboden RBx in Bezug auf die Z-Position einer vorgegebenen Ausrichtung entspricht (siehe dazu ebenfalls Figuren 7a - 7c). Wenn dies der Fall ist (wenn keine Durchbiegung vorliegt oder die Sollposition an die Durchbiegung angepasst ist), wird das Kleinstückgut in einem Schritt 200 auf den Ablagetisch des Greifers bewegt - wie genau dies geschieht, ist abhängig von der genauen Ausgestaltung der Transporteinrichtung des Greifers, die aber nicht erfindungswesentlich ist.

Wenn dies nicht der Fall ist, also eine Durchbiegung vorliegt oder die Durchbiegung nachgelassen hat und keine Anpassung der Sollposition stattgefunden hat, wird in einem Schritt 300 der Greifer entsprechend einer negativen oder positiven Abweichung zwischen aktueller Ausrichtung AA und der vorgegebenen Ausrichtung VA in Z-Richtung verfahren und anschließend ausgelagert (Schritt 200). Abschließend wird dann in einem Schritt 310 die Sollposition SPx zu dem vorgegebenen Regalboden RBx anhand der negativen oder positiven Abweichung angepasst.

## Patentansprüche

1. Greifer (1) für eine Kommissioniervorrichtung mit horizontalen Regalböden (5) zur Lagerung von Kleinstückgütern, aufweisend:
einen sich in einer ersten horizontalen Richtung (X-Richtung) und einer zweiten horizontalen Richtung (Y-Richtung), orthogonal zur ersten horizontalen Richtung erstreckenden Ablagetisch (10) mit zumindest einem Endabschnitt (70) mit einer Auslagerungsstirnseite (71), wobei der Ablagetisch (10) und der Endabschnitt (70) eine obere Auflagefläche (11) definieren,
eine über dem Ablagetisch (10) angeordnete und in der ersten horizontalen Richtung bewegbare Transporteinrichtung (20) zum Bewegen von Kleinstückgütern von einem horizontalen Regalboden auf den Ablagetisch (10), **dadurch gekennzeichnet, dass** der Greifer (1)zudem aufweist:
zumindest eine mit einer Steuereinrichtung (4) gekoppelte und in dem zumindest einen Endabschnitt (70) angeordnete Sensoreinrichtung mit zugeordneten Detektionsbereichen DBx, wobei die Sensoreinrichtung entlang einer vertikalen Z-Achse derart angeordnet ist, dass die Detektionsbereiche DBx einen sich vertikal erstreckenden Raum DB1 - DBn vor der Auslagerungsstirnseite (71) abdecken und wobei die Steuereinrichtung (4) derart ausgebildet ist, dass über eine Auswertung der Sensoreinrichtung die Ausrichtung des Greifers (1) an einem horizontalen Regalboden (5) ermittelbar ist,
wobei die Sensoreinrichtung bezogen auf die Y-Richtung mittig in dem Endabschnitt (70) angeordnet ist.

2. Greifer (1) für eine Kommissioniervorrichtung mit horizontalen Regalböden (5) zur Lagerung von Kleinstückgütern nach Anspruch 1, **dadurch gekennzeichnet, dass** die Transporteinrichtung (20) zwei über dem Ablagetisch (10) angeordnete langgestreckte, sich in X-Richtung erstreckende Greifbacken (20a, 20b) mit einander zugewandten Innenflächen (21a, 21b) umfasst, wobei zumindest eine der Greifbacken zusätzlich zumindest abschnittsweise in der zweiten horizontalen Richtung bewegbar ist.

3. Greifer (1) für eine Kommissioniervorrichtung mit horizontalen Regalböden zur Lagerung von Kleinstückgütern nach Anspruch 1 oder 2, **dadurch gekennzeichnet, dass** die Sensoreinrichtung als eine von dem Ablagetisch (10) lösbare Sensorbaugruppe (80) ausgebildet ist.

4. Greifer (1) für eine Kommissioniervorrichtung mit horizontalen Regalböden zur Lagerung von Kleinstückgütern nach einem der Ansprüche 1 - 3, **dadurch gekennzeichnet, dass** die Sensoreinrichtung derart angeordnet ist, dass sich zumindest ein Detektionsbereich DB1 vertikal über die Auflagefläche (11) erstreckt.

5. Verfahren zum Betreiben einer Kommissioniervorrichtung mit
einer Mehrzahl von horizontalen Regalböden (5),
zumindest einem vor den horizontalen Regalböden (5) verfahrbaren Greifer (1) nach einem der Patentansprüche 1 - 4, wobei
der Greifer (1) in eine vorgegebene Sollposition SPx vor einem vorgegebenen Regalboden RBx bewegt wird,
eine aktuelle Ausrichtung des Greifers (1) in Bezug auf den vorgegebenen Regalboden RBx ermittelt wird, indem geprüft wird, in welchem bzw. welchen Detektionsbereich(en) DBx ein Vorhandensein des Regalbodens erkannt wird,
ermittelt wird, ob die aktuelle Ausrichtung des Greifers (1) an dem vorgegebenen Regalboden RBx in Bezug auf die Z-Position einer vorgegebenen Ausrichtung entspricht, und,
sofern die Prüfung negativ ausfällt,
der Greifer (1) entsprechend einer negativen oder positiven Abweichung zwischen aktueller Ausrichtung AA und der vorgegebenen Ausrichtung VA in Z-Richtung verfahren wird.

6. Verfahren zum Betreiben einer Kommissioniervorrichtung nach Anspruch 5, **dadurch gekennzeichnet, dass** bei Vorliegen einer Abweichung zwischen aktueller Ausrichtung AA und vorgegebener Ausrichtung VA die Sollposition SPx zu einem vorgegebenen Regalboden RBx anhand der Abweichung angepasst wird.

7. Verfahren zum Betreiben einer Kommissioniervorrichtung nach Anspruch 5 oder 6, **dadurch gekennzeichnet, dass** bei Vorliegen einer negativen Abweichung zwischen aktueller Ausrichtung AA und vorgegebener Ausrichtung VA der vorgegebene Regalboden RBx als umzulagernder Regalboden markiert wird.

8. Verfahren zum Betreiben einer Kommissioniervorrichtung nach einem der Ansprüche 5 - 7, **dadurch gekennzeichnet, dass** bei Vorliegen einer Abweichung zwischen aktueller Ausrichtung AA und vorgegebener Ausrichtung VA die Abweichung zur Anpassung einer maximalen Einlagerungshöhe eines Regalbodens unterhalb des vorgegebenen Regalbodens verwendet wird.

9. Verfahren zum Betreiben einer Kommissioniervorrichtung nach einem der Ansprüche 5 - 8, **dadurch gekennzeichnet, dass** bei Vorliegen einer Abweichung zwischen aktueller Ausrichtung AA und vorgegebener Ausrichtung VA der gesamte vorgegebene Regalboden RBx mit dem Greifer in Y-Richtung abgefahren wird und für sämtliche der dem vorgegebenen Regalboden RBx zugeordneten Lagerplätze die Abweichung zwischen aktueller Ausrichtung AA und vorgegebener Ausrichtung bestimmt wird und die den Lagerplätzen zugeordneten Sollpositionen entsprechend angepasst werden.

10. Verfahren zum Betreiben einer Kommissioniervorrichtung nach einem der Ansprüche 5 - 8, **dadurch gekennzeichnet, dass** bei Vorliegen einer Abweichung zwischen aktueller Ausrichtung AA und vorgegebener Ausrichtung VA auf der Basis dieser Abweichung die Abweichungen für sämtliche Lagerplätze des Regalbodens rechnerisch ermittelt werden und die den Lagerplätzen zugeordneten Sollpositionen entsprechend angepasst werden.

11. Verfahren zum Betreiben einer Kommissioniervorrichtung nach Anspruch 9 oder 10, **dadurch gekennzeichnet, dass** die ermittelten Abweichungen zwischen aktueller Ausrichtung und vorgegebener Ausrichtung verwendet werden, um die maximalen Einlagerungshöhen bei sämtlichen Lagerplätzen des Regalbodens unterhalb des vorgegebenen Regalbodens anzupassen.

## Claims

1. Gripper (1) for a picking device having horizontal shelves (5) for storing small piece goods, comprising:
a deposit table (10) which extends in a first horizontal direction (X direction) and a second horizontal direction (Y direction) which is orthogonal to the first horizontal direction and has at least one end portion (70) having a dispensing end face (71), wherein the deposit table (10) and the end portion (70) define an upper support surface (11),
a transport device (20) arranged above the deposit table (10) and movable in the first horizontal direction for moving small piece goods from a horizontal shelf to the deposit table (10), **characterized in that** the gripper (1) further comprises:
at least one sensor device coupled to a control device (4) and arranged in the at least one end portion (70) having detection regions DBx associated therewith, wherein the sensor device is arranged along a vertical Z axis in such a way that the detection regions DBx cover a vertically extending space DB1-DBn in front of the dispensing end face (71) and wherein the control device (4) is designed in such a way that the alignment of the gripper (1) on a horizontal shelf (5) can be determined by evaluating the sensor device,
wherein the sensor device is arranged centrally in the end portion (70) in relation to the Y direction.

2. Gripper (1) for a picking device having horizontal shelves (5) for storing small piece goods according to claim 1, **characterized in that** the transport device (20) comprises two elongated gripping jaws (20a, 20b) arranged above the deposit table (10) and extending in the X direction with inner surfaces (21a, 21b) facing each other, wherein at least one of the gripping jaws is additionally movable at least in sections in the second horizontal direction.

3. Gripper (1) for a picking device having horizontal shelves for storing small piece goods according to claim 1 or 2, **characterized in that** the sensor device is designed as a sensor assembly (80) which is releasable from the deposit table (10).

4. Gripper (1) for a picking device having horizontal shelves for storing small piece goods according to any of claims 1 to 3, **characterized in that** the sensor device is arranged such that at least one detection region DB1 extends vertically over the support surface (11).

5. Method for operating a picking device having
a plurality of horizontal shelves (5),
at least one gripper (1) that can be moved in front of the horizontal shelves (5) according to any of claims 1 to 4,
wherein
the gripper (1) is moved to a specified target position SPx in front of a specified shelf RBx,
a current alignment of the gripper (1) in relation to the specified shelf RBx is determined by checking in which detection region(s) DBx the presence of the shelf is recognized,
it is determined whether the current alignment of the gripper (1) on the specified shelf RBx in relation to the Z position corresponds to a specified alignment, and,
if the check is negative,
the gripper (1) is moved in the Z direction according to a negative or positive deviation between the current alignment AA and the specified alignment VA.

6. Method for operating a picking device according to claim 5, **characterized in that** if there is a deviation between the current alignment AA and the specified alignment VA, the target position SPx is adjusted to a specified shelf RBx on the basis of the deviation.

7. Method for operating a picking device according to either claim 5 or claim 6, **characterized in that** if there is a negative deviation between the current alignment AA and the specified alignment VA, the specified shelf RBx is marked as shelf to be relocated.

8. Method for operating a picking device according to any of claims 5 to 7, **characterized in that** if there is a deviation between the current alignment AA and the specified alignment VA, the deviation is used to adjust a maximum storage height of a shelf below the specified shelf.

9. Method for operating a picking device according to any of claims 5 to 8, **characterized in that** if there is a deviation between the current alignment AA and the specified alignment VA, the entire specified shelf RBx is traversed with the gripper in the Y direction and for all of the storage locations assigned to the specified shelf RBx a deviation between the current alignment AA and the specified alignment is determined and the target positions assigned to the storage locations are adjusted accordingly.

10. Method for operating a picking device according to any of claims 5 to 8, **characterized in that** if there is a deviation between the current alignment AA and the specified alignment VA, the deviations for all storage locations of the shelf are calculated based on this deviation and the target positions assigned to the storage locations are adjusted accordingly.

11. Method for operating a picking device according to either claim 9 or claim 10, **characterized in that** the deviations determined between the current alignment and the specified alignment are used to adjust the maximum storage heights for all storage locations of the shelf below the specified shelf.

## Revendications

1. Préhenseur (1) pour un dispositif de préparation de commandes avec des étagères horizontales (5) pour le stockage de petites articles, comprenant :
une table de dépôt (10) s'étendant dans une première direction horizontale (direction X) et une deuxième direction horizontale (direction Y), orthogonale à la première direction horizontale, avec au moins une section d'extrémité (70) ayant une face de déstockage (71), la table de dépôt (10) et la section d'extrémité (70) définissant une surface de support supérieure (11),
un dispositif de transport (20) disposé au-dessus de la table de dépôt (10) et mobile dans la première direction horizontale pour déplacer des petites articles d'une étagère horizontale sur la table de dépôt (10), **caractérisé en ce que** le préhenseur (1) comprend en outre :
au moins un dispositif de détection couplé à un dispositif de commande (4) et disposé dans la au moins une section d'extrémité (70) avec des zones de détection DBx associées, le dispositif de détection étant disposé le long d'un axe Z vertical de telle sorte que les zones de détection DBx couvrent un espace DB1 - DBn s'étendant verticalement devant la face de déstockage (71) et le dispositif de commande (4) étant conçu de telle sorte que l'orientation du préhenseur (1) sur une étagère horizontale (5) puisse être déterminée par une évaluation du dispositif de détection,
le dispositif de détection étant disposé au milieu de la section d'extrémité (70) par rapport à la direction Y.

2. Préhenseur (1) pour un dispositif de préparation de commandes avec des étagères horizontales (5) pour le stockage de petites articles selon la revendication 1, **caractérisé en ce que** le dispositif de transport (20) comprend deux mâchoires de préhension (20a, 20b) allongées, disposées au-dessus de la table de dépôt (10) et s'étendant dans la direction X, avec des surfaces intérieures (21a, 21b) tournées l'une vers l'autre, au moins une des mâchoires de préhension étant en outre mobile au moins par sections dans la deuxième direction horizontale.

3. Préhenseur (1) pour un dispositif de préparation de commandes avec des étagères horizontales pour le stockage de petites articles selon la revendication 1 ou 2, **caractérisée en ce que** le dispositif de détection est conçu comme un module de détection (80) pouvant être détaché de la table de dépôt (10) .

4. Préhenseur (1) pour un dispositif de préparation de commandes avec des étagères horizontales pour le stockage de petites articles selon l'une des revendications 1 à 3, **caractérisé en ce que** le dispositif de détection est disposé de telle sorte qu'au moins une zone de détection DB1 s'étend verticalement sur la surface de support (11).

5. Procédé d'exploitation d'un dispositif de préparation de commandes avec
une pluralité d'étagères horizontales (5),
au moins un préhenseur (1) déplaçable devant les étagères horizontales (5) selon l'une des revendications 1 à 4, dans lequel
le préhenseur (1) est déplacé dans une position de consigne prédéfinie SPx devant un fond d'étagère prédéfini RBx,
on détermine une orientation actuelle du préhenseur (1) par rapport au fond d'étagère prédéfini RBx, en vérifiant dans quelle(s) zone(s) de détection DBx une présence du fond d'étagère est détectée,
on détermine si l'orientation actuelle du préhenseur (1) sur le fond d'étagère prédéfini RBx correspond à une orientation prédéfinie par rapport à la position Z, et,
si le résultat du contrôle est négatif,
le préhenseur (1) est déplacé dans la direction Z en fonction d'un écart négatif ou positif entre l'orientation actuelle AA et l'orientation prédéfinie VA.

6. Procédé d'exploitation d'un dispositif de préparation de commandes selon la revendication 5, **caractérisé en ce que**, en présence d'un écart entre l'orientation actuelle AA et l'orientation prédéfinie VA, la position de consigne SPx par rapport à une étagère prédéfinie RBx est adaptée à l'aide de l'écart.

7. Procédé d'exploitation d'un dispositif de préparation de commandes selon la revendication 5 ou 6, **caractérisé en ce que**, en présence d'un écart négatif entre l'orientation actuelle AA et l'orientation prédéfinie VA, l'étagère prédéfinie RBx est marquée comme étagère à transborder.

8. Procédé d'exploitation d'un dispositif de préparation de commandes selon l'une des revendications 5 à 7, **caractérisé en ce que**, en présence d'un écart entre l'orientation actuelle AA et l'orientation prédéfinie VA, l'écart est utilisé pour adapter une hauteur de stockage maximale d'une étagère en dessous de l'étagère prédéfinie.

9. Procédé d'exploitation d'un dispositif de préparation de commandes selon l'une des revendications 5 à 8, **caractérisé en ce que**, en présence d'un écart entre l'orientation actuelle AA et l'orientation prédéfinie VA, l'ensemble de l'étagère prédéfinie RBx est parcouru dans la direction Y avec le préhenseur et, pour tous les emplacements de stockage associés à l'étagère prédéfinie RBx, l'écart entre l'orientation actuelle AA et l'orientation prédéfinie est déterminé et les positions de consigne associées aux emplacements de stockage sont adaptées en conséquence.

10. Procédé d'exploitation d'un dispositif de préparation de commandes selon l'une des revendications 5 à 8, **caractérisé en ce que**, en présence d'un écart entre l'orientation actuelle AA et l'orientation prédéfinie VA, on détermine par calcul, sur la base de cet écart, les écarts pour tous les emplacements de stockage du fond d'étagère et on adapte en conséquence les positions de consigne affectées aux emplacements de stockage.

11. Procédé d'exploitation d'un dispositif de préparation de commandes selon la revendication 9 ou 10, **caractérisé en ce que** les écarts déterminés entre l'orientation actuelle et l'orientation prédéfinie sont utilisés pour adapter les hauteurs de stockage maximales pour tous les emplacements de stockage du fond d'étagère en dessous du fond d'étagère prédéfini.
